# EUROPÄISCHE PATENTSCHRIFT

(11) **EP 2 418 747 B1**
(45) Veröffentlichungstag und Bekanntmachung des Hinweises auf die Patenterteilung: **25.11.2015**
(21) Anmeldenummer: 10305887.1
(22) Anmeldetag: 13.08.2010
(51) Int. Cl.: H02G 15/34, H01B 12/16

(54) **Anordnung zum elektrisch leitenden Verbinden von zwei elektrischen Einheiten**
Assembly for a connection conducting electricity composed of two electrical units
Agencement de liaisons électriques conductrices de deux unités électriques

(43) Veröffentlichungstag der Anmeldung: 15.02.2012
(73) Patentinhaber: Nexans, 75008 Paris (FR)
(72) Erfinder: Dr.-Ing. Stemmle, Mark, 30161, Hannover (DE); Dr.-Ing. Marzahn, Erik, 30853, Langenhagen (DE)
(74) Vertreter: Döring, Roger

(56) Entgegenhaltungen:
- EP-A1- 0 395 314
- EP-A1- 0 940 821
- EP-A1- 1 667 172
- WO-A1-2010/039513
- US-A- 3 343 035

## Beschreibung

Die Erfindung bezieht sich auf eine Anordnung zum elektrisch leitenden Verbinden von zwei elektrischen Einheiten mittels einer bipolaren Hochspannungs-Gleichstrom-Übertragung, bei welcher zwischen den Einheiten mindestens zwei elektrische Gleichstromkabel angeordnet sind.

"Elektrische Einheit" im Sinne der Erfindung können beispielsweise ein Stromversorgungsnetz ein Kraftwerk, ein Umspannwerk, eine Umrichterstation sowie auch Abschnitte innerhalb derartiger Einheiten sein. Stellvertretend für alle Anwendungsmöglichkeiten wird im folgenden statt der Worte "elektrische Einheit" das Wort "Netz" verwendet.

Derartige Anordnungen werden in heutiger Technik beispielsweise in sogenannten Verbundnetzen eingesetzt, um eine Zweipunktverbindung mit einer hohen Übertragungsleistung zu realisieren, wie sie beispielsweise bei der Anbindung eines Kraftwerks an ein Netz erforderlich ist. Es können mit einer solchen Anordnung auch unterschiedliche Netze mittels bipolarer Hochspannungs-Gleichstromübertragung miteinander verbunden werden. Das gilt grundsätzlich für alle auf der Erde vorhandenen Netze, die als Drehstromnetze auch unterschiedliche Frequenzen aufweisen können. Die Netze können auch über längere Strecken miteinander verbunden sein. Die in bekannter Technik eingesetzten Gleichstromkabel sind verlustbehafted. Dabei nimmt die Höhe der Verluste der Gleichstromkabel einerseits linear mit der Entfernung zwischen den jeweiligen Netzen und andererseits quadratisch zu der übertragenen Leistung zu. Es muß daher mit entsprechendem Aufwand dafür gesorgt werden, daß ein für alle Fälle ausreichender elektrisch leitender Querschnitt zur Verfügung steht. Das kann in üblicher Technik durch parallele Verlegung einer entsprechenden Anzahl von Gleichstromkabeln erreicht werden.

Der Erfindung liegt die Aufgabe zugrunde, die eingangs geschilderte Anordnung so zu gestalten, daß die Übertragungssicherheit von Gleichstrom einfacher erreicht werden kann.

Diese Aufgabe wird gemäß der Erfindung dadurch gelöst,
- daß die Gleichstromkabel als supraleitfähige Kabel ausgeführt sind, die getrennt voneinander jeweils in einem zur Führung eines Kühlmittels geeigneten Kryostat angeordnet sind, welcher mindestens ein mit einer thermischen Isolierung versehenes Metallrohr aufweist,
- daß die beiden Kryostate zumindest an einem ihrer Enden mit einer das Kühlmittel liefernden Kühlanlage verbunden sind,
- daß parallel zu den beiden Kryostaten eine Rohrleitung verlegt ist,
- daß die Rohrleitung an ihren beiden Enden über bei ungestörtem Betrieb geschlossene Ventile mit beiden Kryostaten verbunden ist und
- daß bei einer Störung an einem der supraleitfähigen Kabel die Rohrleitung mit dann geöffneten Ventilen zur Führung des für den Kryostat des gestörten Kabels bestimmten Kühlmittels dient.

Die Verwendung von Hochtemperatur-Supraleiter in Energieübertragungssystemen ist beispielsweise aus der WO-A-2010/039513 bekannt.

Supraleitfähige Kabel haben in heutiger Technik elektrische Leiter aus einem Verbundstoff, welcher keramisches Material enthält, das bei ausreichend tiefen Temperaturen in den supraleitfähigen Zustand übergeht. Der elektrische Gleichstromwiderstand eines entsprechend aufgebauten Leiters ist bei ausreichender Kühlung Null, solange eine bestimmte Stromstärke nicht überschritten wird. Geeignete keramische Materialien sind beispielsweise BSCCO (Wismut-Strontium-Kalzium-Kupfer-Oxid) als Material der 1. Generation oder ReBCO (Rareearth-Barium-Kupfer-Oxid), insbesondere YBCO (Yttrium-Barium-Kupfer-Oxid), als Materialien der 2. Generation. Ausreichend niedrige Temperaturen, um ein derartiges Material in den supraleitfähigen Zustand zu bringen, liegen beispielsweise zwischen 67 K und 90 K. Geeignete Kühlmittel sind beispielsweise Stickstoff, Helium, Neon und Wasserstoff oder Gemische dieser Stoffe.

Da die supraleitfähigen Gleichstromkabel bei ungestörtem Betrieb den Strom also verlustfrei übertragen, reichen unabhängig von der Länge der Übertragungsstrecke zwei Gleichstromkabel aus. Darüberhinaus können die supraleitfähigen Gleichstromkabel relativ einfach an die gewünschte Höhe der zu übertragenden Leistung angepaßt werden, indem die in denselben enthaltene Menge an supraleitfähigem Material angepaßt wird. Durch die parallel verlegte Rohrleitung ist zusätzlich eine erhöhte Sicherheit für die Übertragung des Gleichstroms zumindest für eine ausreichende Zeitdauer gegeben, weil bei Ausfall eines der Gleichstromkabel ein Kühlmittelkreislauf beispielsweise von der Kühlanlage zum fernen Ende und zurück zur Kühlanlage durch die Rohrleitung aufrechterhalten wird, so daß das funktionsfähige Gleichstromkabel ohne Einschränkung weiterbetrieben werden kann.

Der Strompfad kann dabei über Erde geschlossen sein oder es kann zusätzlich ein normal leitendes elektrisches Kabel parallel zu den beiden supraleitfähigen Gleichstromkabeln verlegt sein, das gegebenenfalls einen zur Erde parallelen Strompfad herstellt.

In der Rohrleitung kann auch ein supraleitfähiges Gleichstromkabel angeordnet sein, das nach entsprechender Abkühlung eines der ausgefallenen Gleichstromkabel ersetzen kann.

Ausführungsbeispiele des Erfindungsgegenstandes sind in den Zeichnungen dargestellt.

Es zeigen:
Fig. 1 zwei mittels einer Anordnung nach der Erfindung verbundene Netze in schematischer Darstellung.
Fig. 2 zwei mit einer Kühlanlage verbundene supraleitfähige Gleichstromkabel enthaltende Kryostate, ebenfalls in schematischer Darstellung.
Fig. 3 einen Querschnitt durch einen Kryostat mit darin befindlichem supraleitfähigem Gleichstromkabel.
Fig. 4 und 5 die Anordnung nach der Erfindung in zwei unterschiedlichen Ausführungsformen in prinzipiellem Aufbau.
Fig. 6 drei unterschiedliche Zustände der Anordnung nach Fig. 4.

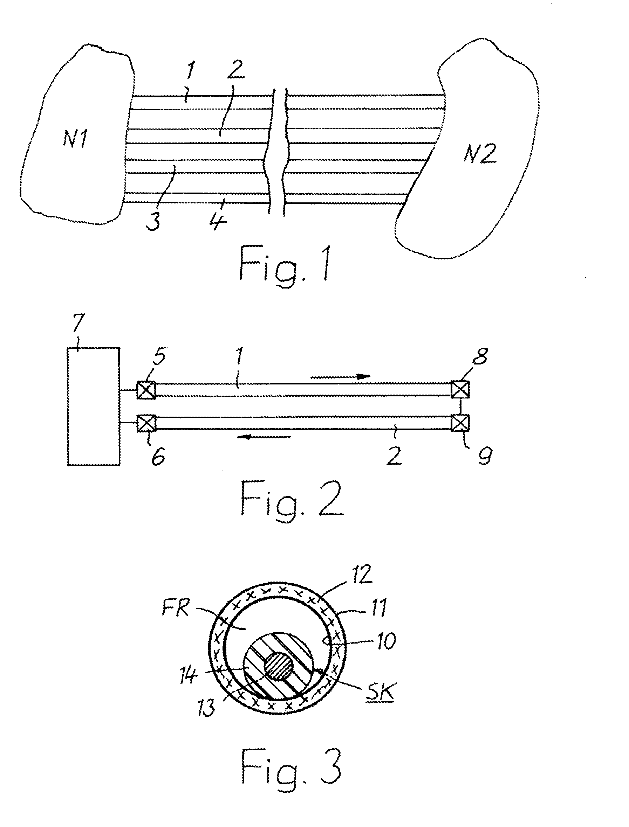

Mit N 1 und N2 sind zwei elektrische Einheiten bezeichnet - im folgenden weiter kurz "Netze" genannt -, die elektrisch leitend miteinander verbunden sind. Dazu sind im dargestellten Ausführungsbeispiel zwischen den beiden Netzen N 1 und N2 zwei Kryostate 1 und 2, deren Aufbau beispielsweise aus Fig. 3 hervorgeht, jeweils mit einem umschlossenen supraleitfähigen Gleichstromkabel SK - im folgenden kurz "Kabel SK" genannt -, eine Rohrleitung 3 und ein normal leitendes elektrisches Kabel 4 angeordnet. Die elektrisch leitende Verbindung der Kabel SK mit den Netzen N 1 und N2 gehört zum Stand der Technik. Es wird daher hier nicht darauf eingegangen.

Während des Betriebes der Anordnung befinden sich die Kabel SK im supraleitfähigen Zustand. Das wird durch ihre Umspülung mit einem Kühlmittel erreicht, das durch den jeweiligen Kryostat 1 bzw. 2 hindurchgeleitet wird. Dazu sind die Kryostate 1 und 2 gemäß Fig. 2 beispielsweise an ihren nahen Enden über Ventile 5 und 6 an eine Kühlanlage 7 angeschlossen. Um einen Kreislauf des Kühlmittels mit Rücklauf zur Kühlanlage 7 zu realisieren, sind die beiden Kryostate 1 und 2 an ihren fernen Enden über hintereinander liegende Ventile 8 und 9 miteinander verbunden. Bei ungestörtem Betrieb der Anordnung sind die Ventile 5 und 6 sowie 8 und 9 geöffnet. Das Kühlmittel kann dann beispielsweise entsprechend den in Fig. 2 eingezeichneten Pfeilen durch den Kryostat 1 in der einen Richtung und durch den Kryostat 2 in der entgegengesetzten Richtung fließen.

Jeder der beiden Kryostate 1 und 2 besteht gemäß Fig. 3 beispielsweise aus zwei konzentrisch und mit Abstand zueinander angeordneten metallischen Rohren 10 und 11, zwischen denen eine Vakuumisolierung 12 angebracht ist. Die Rohre 10 und 11 können quer zu ihrer Längsrichtung gewellt sein. In jedem Kryostat 1 bzw. 2 liegt ein supraleitfähiges Kabel SK, das einen supraleitfähigen Leiter 13 aufweist, der von einem Dielektrikum 14 umgeben ist. Das Kabel SK kann auch mit einem elektrischen Schirm versehen sein. Der im jeweiligen Kryostat 1 oder 2 verbleibende Freiraum FR dient zum Durchleiten des Kühlmittels.

Solange der Betrieb der Anordnung ungestört ist, reichen grundsätzlich die beiden Kryostate 1 und 2 mit darin befindlichen Kabeln SK zur elektrisch leitenden Verbindung der Netze N 1 und N2 aus. Aus Sicherheitsgründen ist bei dieser Anordnung zwischen den beiden Netzen N 1 und N2 parallel zu den Kryostaten 1 und 2 die Rohrleitung 3 angeordnet, die bei Ausfall eines der Kabel SK zur Aufrechterhaltung des Kühlmittelkreislaufs an den Kryostat des noch funktionsfähigen Kabels SK angeschlossen wird. Dazu ist die Rohrleitung 3 mit Vorteil thermisch isoliert. Sie kann grundsätzlich so wie die beiden Kryostate 1 und 2 aufgebaut sein.

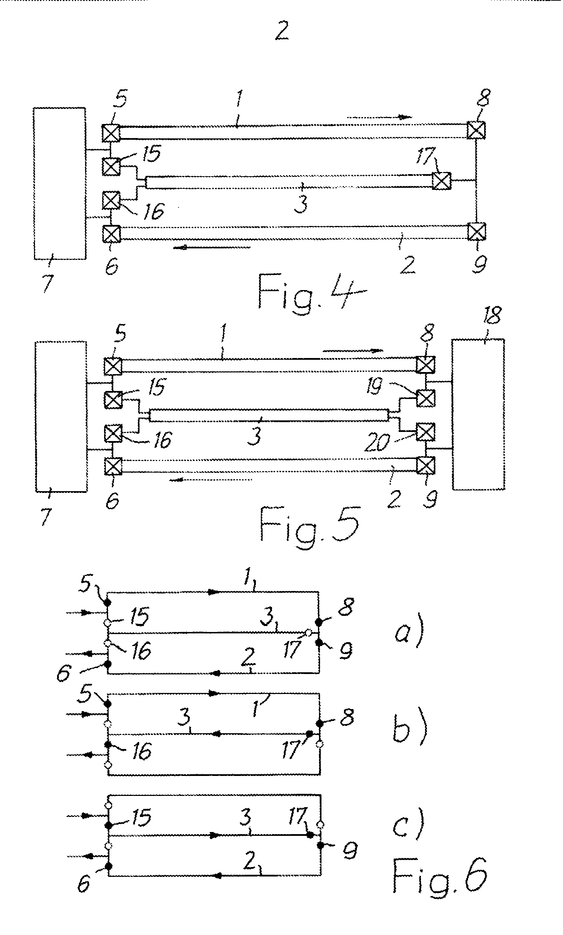

Die Rohrleitung 3 ist bei der Ausführungsform der Anordnung nach Fig. 4 am nahen Ende über Ventile 15 und 16, die in entsprechenden Rohrverbindungen angebracht sein können, mit dem Ventil 5 einerseits und dem Ventil 6 andererseits verbunden. Am fernen Ende ist die Rohrleitung 3 über ein in einer Rohrverbindung liegendes Ventil 17 mit den Ventilen 8 und 9 der Kryostate 1 und 2 verbunden. Die Ventile 15, 16 und 17 sind bei ungestörtem Betrieb der Anordnung geschlossen. Diese Anordnung arbeitet mit einem Kühlmittelkreislauf, der von der Kühlanlage 7 ausgeht und durch den Kryostat 1 in der einen Richtung und den Kryostat 2 in der anderen Richtung zurück zur Kühlanlage 7 führt.

Bei der Ausführungsform der Anordnung nach Fig. 5 ist an beiden Enden der Kryostate 1 und 2 je eine Kühlanlage eingesetzt. Die Kühlanlage 7 führt das Kühlmittel dabei beispielsweise dem Kryostat 1 zu, von dem es zur Rückkühlung der zweiten Kühlanlage 18 am anderen Ende des Kryostats 1 aufgegeben wird. Dem Kryostat 2 wird analog dazu das Kühlmittel beispielsweise von der Kühlanlage 18 aufgegeben. Auch bei dieser Ausführungsform der Anordnung kann das Kühlmittel im Bedarfsfall auf die Rohrleitung 3 umgeleitet werden. Dazu ist die Rohrleitung 3 am Ende der zweiten Kühlanlage 18 über ein Ventil 19 mit dem Ventil 8 des Kryostats 1 und über ein Ventil 20 mit dem Ventil 9 des Kryostats 2 verbunden. Die Ventile 19 und 20 liegen in entsprechenden Rohrverbindungen. Sie sind bei ungestörtem Betrieb geschlossen.

Die Funktionsweise der Anordnung nach der Erfindung gemäß Fig. 4 wird anhand von Fig. 6 beispielsweise erläutert:

In Fig. 6a ist die Anordnung bei ungestörtem Betrieb entsprechend Fig. 4 dargestellt. Die dabei geöffneten Ventile 5 und 6 sowie 8 und 9 sind durch einen Punkt gekennzeichnet, während für die geschlossenen Ventile 15, 16 und 17 ein Kreis eingezeichnet ist. Der Kühlmittelkreislauf ist durch eingezeichnete Pfeile wiedergegeben.

Wenn beispielsweise das Kabel SK im Kryostat 2 ausfällt, werden seine Ventile 6 und 9 geschlossen und gleichzeitig die Ventile 16 und 17 der Rohrleitung 3 geöffnet, so wie es in Fig. 6b wiedergegeben ist. Der Kühlmittelkreislauf ist dann entsprechend den eingezeichneten Pfeilen über die Rohrleitung 3 geschlossen.

Fig. 6c zeigt den anderen Fall, bei dem das Kabel SK des Kryostats 1 ausgefallen ist. Hier sind dann die Ventile 5 und 8 geschlossen und die Ventile 15 und 17 der Rohrleitung 3 geöffnet. Der Kühlmittelkreislauf folgt den eingezeichneten Pfeilen. Mit etwas Zusatzaufwand könnte hier die Richtung des Kühlmittelkreislaufs auch umgekehrt werden, damit der Kryostat 2 direkt an die Kühlanlage 7 angeschlossen ist.

Die Anordnung kann durch den Einsatz der Rohrleitung 3 und den dadurch aufrechterhaltenen Kühlmittelkreislauf ohne wesentliche Einschränkung weiterbetrieben werden, allerdings mit einer um etwa 50 % reduzierten Leistung. Dabei reicht es aus, wenn der Strompfad über Erde geschlossen ist. Es kann aber gleichzeitig mit der Anschaltung der Rohrleitung 3 auch das elektrische Kabel 4 als Parallelpfad zur Erde eingesetzt werden.

Es ist auch möglich, in der Rohrleitung 3 ein weiteres supraleitfähiges Kabel SK vorzuhalten, das nach Anschaltung der Rohrleitung 3 vom Kühlmittel umspült und dadurch nach entsprechender Zeitdauer bis zum supraleitfähigen Zustand abgekühlt wird. Danach kann die so bestückte Rohrleitung 3 den Kryostat mit dem ausgefallenen Kabel SK vollwertig ersetzen.

## Patentansprüche

1. Anordnung zum elektrisch leitenden Verbinden von zwei elektrischen Einheiten mittels einer bipolaren Hochspannungs-Gleichstrom-Übertragung, bei welcher zwischen den Einheiten mindestens zwei elektrische Gleichstromkabel angeordnet sind, **dadurch gekennzeichnet,**
- **daß** die Gleichstromkabel als supraleitfähige Kabel (SK) ausgeführt sind, die getrennt voneinander jeweils in einem zur Führung eines Kühlmittels geeigneten Kryostat (1,2) angeordnet sind, welcher mindestens ein mit einer thermischen Isolierung versehenes Metallrohr aufweist,
- **daß** die beiden Kryostate (1,2) zumindest mit einem ihrer Enden mit einer das Kühlmittel liefernden Kühlanlage verbunden sind,
- **daß** parallel zu den beiden Kryostaten (1,2) eine Rohrleitung (3) verlegt ist,
- **daß** die Rohrleitung (3) an ihren beiden Enden über bei ungestörtem Betrieb geschlossene Ventile mit beiden Kryostaten (1,2) verbunden ist und
- **daß** bei einer Störung an einem der supraleitfähigen Kabel (SK) die Rohrleitung (3) mit dann geöffneten Ventilen zur Führung des für den Kryostat des gestörten Kabels bestimmten Kühlmittels dient.

2. Anordnung nach Anspruch 1, **dadurch gekennzeichnet, daß** die Rohrleitung (3) thermisch isoliert ist.

3. Verfahren zum Betrieb einer Anordnung nach Anspruch 1 oder 2, **dadurch gekennzeichnet,**
- **daß** das Kühlmittel in einem der Kryostate von der das Kühlmittel liefernden Kühlanlage (7) zum fernen Ende und in dem anderen Kryostat vom fernen Ende, an dem beide Kryostate (1,2) miteinander verbunden sind, zurück zur Kühlanlage (7) transportiert wird, und
- **daß** die beiden Kryostate (1,2) an ihren nahen Enden über je ein Ventil (5,6) mit der Kühlanlage (7) und an ihren fernen Ende über zwei hintereinander liegende Ventile (8,9) miteinander verbunden werden, wobei im ungestörten Betrieb alle Ventile geöffnet sind, und
- **daß** parallel zu den Kryostaten (1,2) eine Rohrleitung (3) verlegt wird, die über bei ungestörtem Betrieb geschlossene Ventile mit den Ventilen der Kryostate (1,2) verbunden sind.

## Claims

1. Arrangement for electrically conductively connecting of two electrical units by a bipolar high voltage direct current transmission, in which at least two electrical direct current cables are arranged between the units, **characterized in**
- **that** the direct current cables are superconductive cables (SK) which are each arranged separately from each other in a cryostat (1,2) suitable for conducting a cooling medium, wherein each cryostat consists of at least one metal pipe provided with a thermal insulation,
- **that** the two cryostats (1,2) are connected to a cooling aggregate which delivers the cooling medium at least with one of their ends,
- **that** a pipeline (3) is placed parallel to the two cryostats (1,2),
- **that** the pipeline (3) is connected at its both ends through valves to both cryostats (1,2), which are closed during undisturbed operation, and
- **that** in the case of a disturbance of one of the superconductive cables (SK), the pipeline (3) serves for conducting the cooling medium determined for the cryostat of the disturbed cable with the valves then being open.

2. Arrangement according to claim 1, **characterized in that** the pipeline (3) is thermally insulated.

3. Method for the processing of an arrangement according to claim 1 or 2, **characterized in**
- **that** the cooling medium is transported from the cooling aggregate (7) which delivers the cooling medium to the remote end through one of the cryostats and transported back to the cooling aggregate (7) from the remote end, at which both cryostats (1,2) are connected to each other, through the other cryostat, and
- **that** both cryostats (1,2) are connected to the cooling aggregate (7) at their near ends via one valve (5,6) respectively and at the irremote ends connected to each other via two valves (8,9) lying in series, wherein during undisturbed operation all the valves are opened, and
- **that** a pipeline (3) is laid in parallel to the cryostats (1,2), which is connected to the valves of the cryostats (1,2) via valves that are closed during undisturbed operation.

## Revendications

1. Dispositif destiné à connecter de manière électriquement conductrice deux unités électriques au moyen d'une transmission en courant continu à haute tension bipolaire, dans lequel au moins deux câbles électriques à courant continu sont disposés entre les unités, **caractérisé en ce**
- **que** les câbles à courant continu sont réalisés sous la forme de câbles supraconducteurs (SK) qui sont respectivement disposés de manière séparée l'un de l'autre dans un cryostat (1, 2) approprié pour l'acheminement d'un réfrigérant, lequel cryostat comprend au moins un tube métallique muni d'une isolation thermique,
- **que** les deux cryostats (1, 2) sont reliés au niveau d'au moins l'une de leur extrémité à une installation réfrigérante délivrant le réfrigérant,
- **qu'**une conduite (3) est posée parallèlement aux deux cryostats (1, 2),
- **que** la conduite (3) est reliée au niveau de ses deux extrémités aux deux cryostats (1, 2) par l'intermédiaire de vannes fermées lors d'un fonctionnement non perturbé et
- **que** lors d'une perturbation affectant l'un des câbles supraconducteurs (SK), la conduite (3) est utilisée avec la vanne alors ouverte pour acheminer le réfrigérant déterminé pour le cryostat du câble perturbé.

2. Dispositif selon la revendication 1, **caractérisé en ce que** la conduite (3) est isolée thermiquement.

3. Procédé destiné à mettre en fonctionnement un dispositif selon la revendication 1 ou 2, **caractérisé en ce**
- **que** le réfrigérant contenu dans l'un des cryostats est transporté depuis l'installation réfrigérante (7) délivrant le réfrigérant à l'extrémité distante et est transporté dans l'autre cryostat depuis l'extrémité distante à laquelle les deux cryostats (1, 2) sont reliés l'un à l'autre pour revenir vers l'installation réfrigérante (7) et
- **que** les deux cryostats (1, 2) sont reliés l'un à l'autre à leurs extrémités proches par l'intermédiaire d'une vanne respective (5, 6) à l'installation réfrigérante (7) et sont reliées l'une à l'autre au niveau de leurs extrémités distantes par l'intermédiaire de deux vannes situées l'une à la suite de l'autre (8, 9), dans lequel toutes les vannes sont ouvertes lors d'un fonctionnement non perturbé, et
- **qu'**une conduite (3) est posée parallèlement aux cryostats (1, 2) qui sont reliés, par l'intermédiaire de vannes fermées lors d'un fonctionnement non perturbé, aux vannes des cryostats (1, 2).
